# EUROPÄISCHE PATENTSCHRIFT

(11) **EP 1 900 962 B1**
(45) Veröffentlichungstag und Bekanntmachung des Hinweises auf die Patenterteilung: **29.07.2009**
(21) Anmeldenummer: 07016793.7
(22) Anmeldetag: 28.08.2007
(51) Int. Cl.: F16D 65/12

(54) **Belüftete Bremsscheibe**
Ventilated brake disk
Disque de frein à ventilation

(30) Priorität: 14.09.2006 DE 102006043945
(43) Veröffentlichungstag der Anmeldung: 19.03.2008
(73) Patentinhaber: AUDI AG, 85045 Ingolstadt (DE); Schwäbische Hüttenwerke Automotive GmbH & Co. KG, 73433 Aalen-Wasseralfingen (DE)
(72) Erfinder: Hoffmann, Ingo, 78532 Tuttlingen (DE); Pallentien, Manfred, 78234 Engen (DE); Waschkau, Roland, 74172 Neckarsulm (DE); Terfloth, Kristof, 71717 Beilstein (DE)
(74) Vertreter: Schmid, Wolfgang

(56) Entgegenhaltungen:
- EP-A- 0 987 462
- EP-A- 1 128 083
- DE-A1- 2 033 033
- DE-A1- 3 536 465
- DE-A1- 4 338 593

## Beschreibung

Die Erfindung betrifft eine belüftete Bremsscheibe für eine Scheibenbremse, insbesondere für ein Kraftfahrzeug, mit einem Reibring und einem Bremsscheibentopf, nach der im Oberbegriff von Anspruch 1 näher definierten Art.

Eine gattungsgemäße Bremsscheibe mit einem Reibring und einem als Tiefziehteil ausgebildeten, mit dem Reibring durch Eingießen verbundenen Bremsscheibentopf ist aus der DE 20 33 033 A1 bekannt. Weitere ähnliche Bremsscheiben mit innenbelüfteten Reibringen beschreiben die EP 1 128 083 A1, die DE 43 38 593 A1, die DE 43 32 951 A1, die DE 103 22 454 A1, die DE 102 27 529 A1, die DE 101 03 639 A1 und die WO 2006/046258 A1.

Reibring erfolgt über mehrere um den Umfang desselben angeordnete Verbindungselemente, die in jeweilige Aussparungen des Reibrings eingreifen. Problematisch bei den bekannten Bremsscheiben ist jedoch, dass die Verbindungselemente das Einströmen von Luft in den zwischen den Reibringen gebildeten Spalt behindern, was zu einer schlechteren Kühlung des Reibrings führt. Konstruktiv wird diesem Problem meist durch eine Vergrößerung des Durchmessers des Reibrings begegnet, wodurch sich jedoch die Masse der Scheibenbremse und damit die gesamte rotierende Masse vergrößern. Problematisch ist dies insbesondere bei Sportwagen, die sehr hohe Geschwindigkeiten erreichen und demzufolge entsprechend leistungsfähige Bremsanlagen benötigen, bei denen jedoch die Gewichtseinsparung eine entscheidende Rolle spielt.

Es ist daher Aufgabe der vorliegenden Erfindung, eine belüftete Bremsscheibe für eine Scheibenbremse zu schaffen, die eine verbesserte Belüftung aufweist.

Erfindungsgemäß wird diese Aufgabe durch die in Anspruch 1 genannten Merkmale gelöst.

Durch die axiale Versetzung der Mittelachsen der Verbindungselemente gegenüber der Mitte des Reibrings, also die asymmetrische Anordnung der Verbindungselemente gegenüber dem Reibring, werden die zwischen den beiden Reibringhälften vorhandenen Belüftungssschlitze freigegeben und sind nicht mehr durch die Verbindungselemente versperrt, so dass Kühlluft ungehindert in dieselben einströmen kann. Dadurch ergibt sich eine erheblich verbesserte Kühlung des Reibrings, wodurch die die belüftete Bremsscheibe aufweisende Scheibenbremse eine erheblich verbesserte Bremsleistung erzielen kann. Dadurch ist es wiederum möglich, den Reibring zu verkleinern und somit dessen Masse zu verringern, was zu einer gerade beim Einsatz in Kraftfahrzeugen sehr vorteilhaften Verringerung der rotierenden Massen führt.

Die verbesserte Kühlung der Bremsscheibe trägt außerdem zu einer Verringerung der Rissanfälligkeit derselben bei, so dass eine höhere Dauerfestigkeit erreicht werden kann.

In einer sehr vorteilhaften Weiterbildung der Erfindung kann vorgesehen sein, dass die Mittelachsen der Verbindungselemente in Richtung der Außenseite des Reibrings versetzt sind. Zum einen lässt sich durch diese Maßnahme, aufgrund der Tatsache, dass der Bremsscheibentopf von der Außenseite her mit dem Reibring verbunden ist, die Masse des Bremsscheibentopfs verringern, was zu einer weiteren Verringerung der rotierenden Massen führt. Zum anderen ist eine solche Ausgestaltung insbesondere bei Bremsscheiben vorteilhaft, bei denen die Luft von der Innenseite her kommend in die Schlitze zwischen den beiden Reibringhälften einströmt, weil auf diese Weise eine verbesserte Einströmung erreicht und die Kühlung des Reibrings weiter verbessert wird.

Alternativ dazu kann in bestimmten Ausführungsformen auch vorgesehen sein, dass die Mittelachsen der Verbindungselemente in Richtung der Innenseite des Reibrings versetzt sind.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig beschrieben.

Es zeigt:
- Fig. 1: einen Schnitt durch die erfindungsgemäße belüftete Bremsscheibe nach der Linie I-I aus Fig. 2; und
- Fig. 2: einen Schnitt durch die Bremsscheibe aus Fig. 1 nach den Linien II-II und III-III aus Fig. 1.

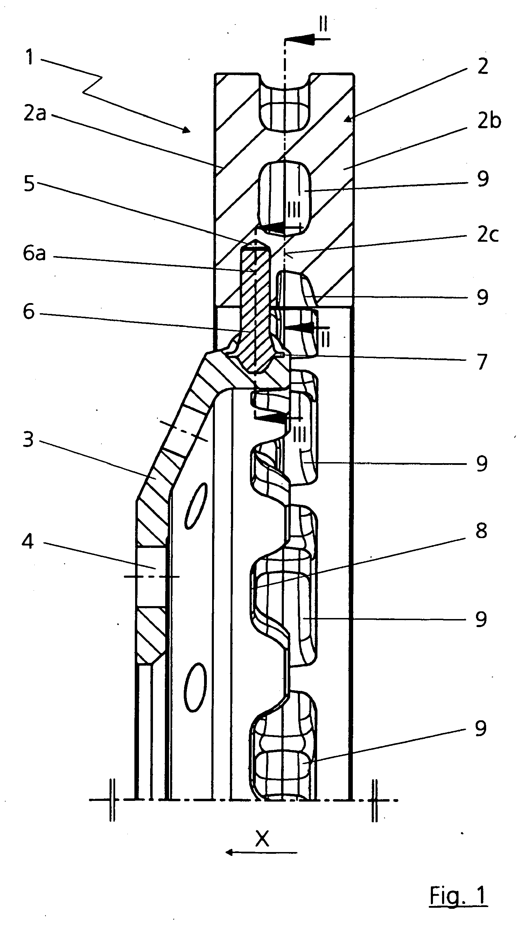

Fig. 1 zeigt eine belüftete Bremsscheibe 1 für eine in ihrer Gesamtheit nicht dargestellte Scheibenbremse, die insbesondere bei einem ebenfalls nicht dargestellten Kraftfahrzeug Einsatz finden kann. Die Bremsscheibe 1 weist einen beispielsweise aus Grauguss bestehenden Reibring 2 und einen beispielsweise aus einem Aluminiumwerkstoff bestehenden Bremsscheibentopf 3 auf, der in bekannter, jedoch nicht dargestellter Weise auf einer Nabe eines Rads des Kraftfahrzeugs befestigt werden kann. Zum Durchführen von nicht dargestellten Schrauben zur Radbefestigung weist der Bremsscheibentopf 3 in an sich bekannter Weise mehrere Ausnehmungen 4 auf.

Der aus zwei Reibringhälften 2a und 2b bestehende Reibring 2 wird in an sich bekannter Weise gegossen und es werden nach dem Gießen am inneren Umfang desselben mehrere Bohrungen bzw. Ausnehmungen 5 eingebracht, in welche anschließend im vorliegenden Falls als Stifte oder als Rohre ausgebildete Verbindungselemente 6 eingebracht werden sind. Zwischen den Verbindungselementen 6 und den Ausnehmungen 5 besteht eine Passung, insbesondere eine Übergangs- oder Presspassung, sodass sich der Reibring 2 beispielsweise infolge von Erwärmung in radialer Richtung ausdehnen kann. Nach der Anbringung der Verbindungselemente 6 in dem Reibring 2 werden dieselben mit dem Material des Bremsscheibentopfs 3 umgossen. Die Verbindung der beispielsweise aus Edelstahl bestehenden Verbindungselemente 6 mit dem Bremsscheibentopf 3 und somit die Verbindung des Bremsscheibentopfs 3 mit dem Reibring 2 erfolgt also durch Umgießen der Verbindungselemente 6 mit dem Bremsscheibentopf 3 bzw. durch eingießen derselben in den Bremsscheibentopf 3, wozu die Verbindungselemente 6 an ihrer dem Bremsscheibentopf 3 zugewandten Seite jeweilige Verbreiterungen 7 aufweisen.

In Fig. 1 ist des weiteren erkennbar, dass der Bremsscheibentopf 3 an seinem in den Reibring 2 ragenden Ende 3a jeweilige zwischen den Verbindungselementen 6 liegende Ausnehmungen 8 aufweist, die zu einer Verringerung der Masse des Bremsscheibentopfs 3 sowie zu einer besseren Anströmung des Reibrings 2 mit Kühlluft beitragen. Durch die Vielzahl von Ausnehmungen 8 erhält das dem Reibring 2 zugewandte Ende des Bremsscheibentopfs 3 eine Art Wellenform.

Wie aus Fig. 1 des weiteren deutlich hervorgeht, sind die Mittelachsen 6a der Verbindungselemente 6 gegenüber der in Axialrichtung X betrachteten Mitte des Reibrings 2 in Dicken- bzw. Axialrichtung X desselben versetzt. Die Mitte des Reibrings 2 in Breiten- bzw. Axialrichtung X desselben ist im vorliegenden Fall mit dem Bezugszeichen 2c versehen. Durch diese versetzte, gegenüber dem Reibring 2 asymmetrische Anordnung der Verbindungselemente 6 kann die von innen in den Bremsscheibentopf 3 einströmende Luft in Schlitze 9 einströmen, die zwischen jeweiligen, die beiden Reibringhälften 2a und 2b des Reibrings 2 miteinander verbindenden Stegen 10 gebildet sind. Um diese Anströmung von der Innenseite des Bremsscheibentopfs 3 her zu unterstützen, sind bei der dargestellten Ausführungsform die Mittelachsen 6a der Verbindungselemente 6 in Richtung der Außenseite des Reibrings 2, also in die Richtung, von welcher der Reibring 2 in den Bremsscheibentopf 3 ragt, versetzt. Alternativ dazu wäre auch eine Versetzung der Mittelachsen 6a der Verbindungselemente 6 in Richtung der Innenseite des Reibrings 2 denkbar, beispielsweise wenn die Kühlluft von der Außenseite des Bremsscheibentopfs 2 in die Schlitze 9 des Reibrings 2 einströmt. Die Verbindungselemente 6 sind in beiden Fällen so angeordnet, dass sie die Anströmung der Schlitze 9 durch die Kühlluft nicht behindern.

Dadurch, dass die Verbindungselemente 6 in Axialrichtung X des Reibrings 2 aus der Mitte desselben versetzt sind, können außerdem die oben beschriebenen Ausnehmungen 8 des Bremsscheibentopfes 3 vergrößert werden, was zu einer noch besseren Anströmung der Schlitze 9 des Reibrings 2 führt.

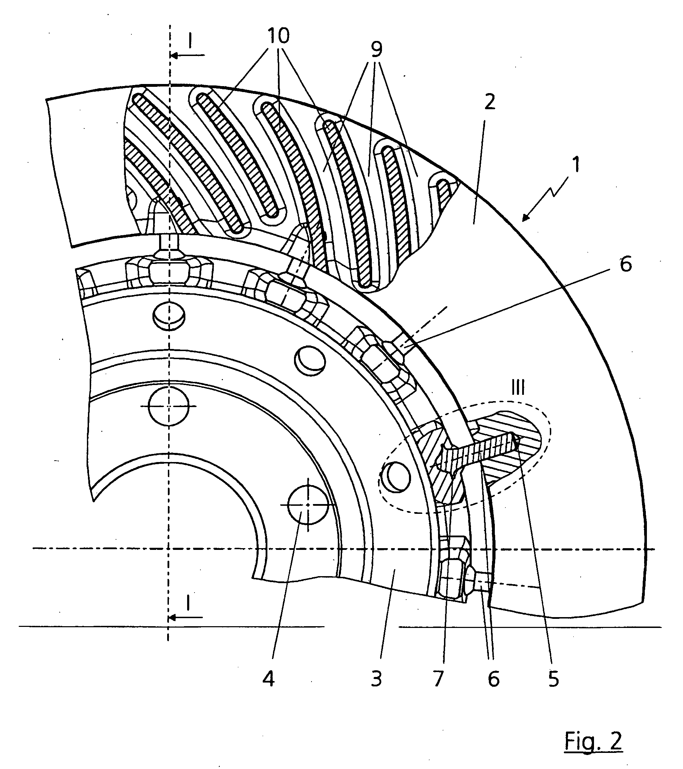

Der Verlauf der Stege 10 und der zwischen denselben gebildeten Schlitze 9 ist in Fig. 2 detaillierter erkennbar, wobei selbstverständlich auch andere Möglichkeiten zur Verbindung der beiden Reibringhälften 2a und 2b bestehen, wie zum Beispiel durch einzelne, kürzere Rippen oder ähnliches. In dem gemäß dem Schnitt III-III aus Fig. 1 mit "III" bezeichneten Ausschnitt in Fig. 2 ist des weiteren zu erkennen, dass die Verbindungselemente 6 in die Stege 10 eingreifen, d. h. dass die Ausnehmungen 5 in dem Reibring 2 zumindest teilweise innerhalb der Stege 10 verlaufen. Die Stege 10 ergeben sich in an sich bekannter Weise beim Gießen des Reibrings 2, der einteilig aus den beiden Reibringhälften 2a und 2b sowie den Stegen 10 gebildet wird.

Durch die beschriebene Versetzung der Mittelachsen 6a der Verbindungselemente 6 in Axialrichtung X des Reibrings 2 aus der Mitte 2c desselben können im Gegensatz zu einer mittigen Anordnung der Verbindungselemente 6 zwar Momente auf die Verbindungselemente 6 aufgebracht werden und auf einer Seite der Verbindungselemente 6 entsteht jeweils ein Bereich, an dem der Reibring 2 eine relativ geringe Dicke aufweist, dies ist jedoch festigkeitsmäßig beherrschbar und stellt gegenüber dem Vorteil der erheblich besseren Kühlung des Reibrings 2 nur ein sehr geringes Problem dar.

## Patentansprüche

1. Belüftete Bremsscheibe (1) für eine Scheibenbremse, insbesondere für ein Kraftfahrzeug, mit einem Reibring (2) und einem Bremsscheibentopf (3), welcher mittels mehrerer um den Umfang desselben angeordneter, in radialer Richtung verlaufender Verbindungselemente (6) mit dem Reibring (2) verbunden ist, wobei die Mittelachsen (6a) der Verbindungselemente (6) gegenüber der Mitte (2c) des Reibrings (2) in Axialrichtung (X) desselben versetzt sind,
**dadurch gekennzeichnet, dass** die Verbindungselemente (6) als Stifte oder als Rohre ausgebildet sind.

2. Bremsscheibe nach Anspruch 1,
**dadurch gekennzeichnet, dass** die Mittelachsen (6a) der Verbindungselemente (6) in Richtung der Außenseite des Reibrings (2) versetzt sind.

3. Bremsscheibe nach Anspruch 1,
**dadurch gekennzeichnet, dass** die Mittelachsen (6a) der Verbindungselemente (6) in Richtung der Innenseite des Reibrings (2) versetzt sind.

4. Bremsscheibe nach einem der Ansprüche 1 bis 3,
**dadurch gekennzeichnet, dass** der Bremsscheibentopf (3) an seinem in den Reibring (2) ragenden Ende (3a) jeweilige zwischen den Verbindungselementen (6) angeordnete Ausnehmungen (8) aufweist.

5. Bremsscheibe nach einem der Ansprüche 1 bis 4,
**dadurch gekennzeichnet, dass** die Verbindungselemente (6) in den Bremsscheibentopf (3) eingegossen sind, wobei die Verbindungselemente (6) an ihrer dem Bremsscheibentopf (3) zugewandten Seite jeweilige Verbreiterungen (7) aufweisen.

6. Bremsscheibe nach einem der Ansprüche 1 bis 5,
**dadurch gekennzeichnet, dass** die Verbindungselemente (6) auf der dem Bremsscheibentopf (3) gegenüberliegenden Seite in Ausnehmungen (5) des Reibrings (2) untergebracht sind.

7. Bremsscheibe nach einem der Ansprüche 1 bis 6,
**dadurch gekennzeichnet, dass** die Verbindungselemente (6) in zwei Reibringhälften (2a,2b) des Reibrings (2) miteinander verbindende Stege (10) eingreifen.

## Claims

1. Ventilated brake disc (1) for a disc brake, in particular for a motor vehicle, comprising a friction ring (2) and a brake disc carrier (3), which is connected by means of a plurality of radially extending connection elements (6) disposed around its circumference to the friction ring (2), wherein the centre lines (6a) of the connection elements (6) are offset relative to the centre (2c) of the friction ring (2) in axial direction (X) thereof,
**characterized in that**
the connection elements (6) take the form of pins or pipes.

2. Brake disc according to claim 1,
**characterized in that**
the centre lines (6a) of the connection elements (6) are offset in the direction of the outside of the friction ring (2).

3. Brake disc according to claim 1,
**characterized in that**
the centre lines (6a) of the connection elements (6) are offset in the direction of the inside of the friction ring (2).

4. Brake disc according to one of claims 1 to 3,
**characterized in that**
the brake disc carrier (3) at its end (3a) projecting into the friction ring (2) has respective recesses (8) disposed between the connection elements (6).

5. Brake disc according to one of claims 1 to 4,
**characterized in that**
the connection elements (6) are integrally cast in the brake disc carrier (3), wherein the connection elements (6) at their side facing the brake disc carrier (3) have respective widened portions (7).

6. Brake disc according to one of claims 1 to 5,
**characterized in that**
the connection elements (6) at the opposite side to the brake disc carrier (3) are accommodated in recesses (5) of the friction ring (2).

7. Brake disc according to one of claims 1 to 6,
**characterized in that**
the connection elements (6) engage into webs (10) that connect two friction ring halves (2a, 2b) of the friction ring (2) to one another.

## Revendications

1. Disque de frein ventilé (1) pour un frein à disque, en particulier pour un véhicule automobile, comprenant une couronne de friction (2) et un godet de disque de frein (3), lequel est relié à la couronne de friction (2) au moyen de plusieurs éléments de liaison (6) disposés sur le tour de la circonférence de ce godet et s'étendant dans une direction radiale, dans lequel les axes médians (6a) des éléments de liaison (6) sont déportés par rapport au milieu (2c) de la couronne de friction (2) dans la direction axiale (X) de cette dernière,
**caractérisé en ce que**
les éléments de liaison (6) sont constitués par des tiges ou des tubes.

2. Disque de frein selon la revendication 1,
**caractérisé en ce que**
les axes médians (6a) des éléments de liaison (6) sont déportés en direction du côté extérieur de la couronne de friction (2).

3. Disque de frein selon la revendication 1,
**caractérisé en ce que**
les axes médians (6a) des éléments de liaison (6) sont déportés en direction du côté intérieur de la couronne de friction (2).

4. Disque de frein selon l'une des revendications 1 à 3,
**caractérisé en ce que,**
à son extrémité (3a) engagée dans la couronne de friction (2), le godet de disque de frein (3) comporte des évidements (8) disposés respectivement entre les éléments de liaison (6).

5. Disque de frein selon l'une des revendications 1 à 4,
**caractérisé en ce que**
les éléments de liaison (6) sont coulés dans le godet de disque de frein (3), les éléments de liaison (6) comportant des renflements respectifs (7) sur leur côté dirigé vers le godet de disque de frein (3).

6. Disque de frein selon l'une des revendications 1 à 5,
**caractérisé en ce que,**
sur le côté situé à l'opposé du godet de disque de frein (3), les éléments de liaison (6) sont logés dans des évidements (5) de la couronne de friction (2).

7. Disque de frein selon l'une des revendications 1 à 6,
**caractérisé en ce que**
les éléments de liaison (6) sont engagés dans des nervures (10) qui assemblent l'une à l'autre deux demi-couronnes de friction (2a, 2b) de la couronne de friction (2).
